# EUROPEAN PATENT APPLICATION

(11) **EP 1 521 382 A2**
(43) Date of publication of application: **06.04.2005**
(21) Application number: 04023400.7
(22) Date of filing: 01.10.2004
(51) Int. Cl.: H04B 7/02, H04Q 7/38

(54) **Diversity handover mobile station**

(30) Priority: 02.10.2003 JP 2003345003
(71) Applicant: NTT DoCoMo, Inc., Tokyo 100-6150 (JP)
(72) Inventor: Moon, Sung Uk, Int. Pro. Dpt., NTT DoCoMo, Inc., Chiyoda-ku, Tokyo (JP); Nakamura, Takehiro, Int.Pro.Dpt., NTT DoCoMo, Inc., Chiyoda-ku, Tokyo (JP); Ishii, Minami, Int.Pro.Dpt., NTT DoCoMo, Inc., Chiyoda-ku, Tokyo (JP); Umesh, Anil, Int. Pro. Dpt., NTT DoCoMo, Inc., Chiyoda-ku, Tokyo (JP)
(74) Representative: HOFFMANN - EITLE

(57) **Abstract**

A mobile station MS is configured to receive a plurality of same data via a plurality of radio links from at least one base station BTS. The mobile station MS includes a measurer 13 configured to measure a reception quality of each of the plurality of same data received via the plurality of radio links; a selector 14 configured to select data having the highest reception quality among from the received plurality of same data; and a decoder 15 configured to perform an error correction decoding on a selected data.

## Description

### CROSS REFERENCE TO RELATED APPLICATION

This application is based upon and claims the benefit of priority from the prior Japanese Patent Application No. P2003-345003, filed on October 2, 2003; the entire contents of which are incorporated herein by reference.

### BACKGROUND OF THE INVENTION

### 1. Field of the Invention

The present invention relates to a mobile station which receives a plurality of same data via a plurality of radio links from one or a plurality of base station(s).

### 2. Description of the Related Art

In a conventional second generation radio communications system such an a personal digital cellular (PDC) system, a hard handover method in which a mobile station is configured to set up a connection with a handover-destination cell after releasing a connection with a handover-source cell is ongoing.

On the other hand, in a conventional radio communications system using a code division multiple access (CDMA) method, a diversity handover method in which a mobile station is configured to set up a connection with a handover-destination cell before releasing a connection when moving between cells during communications is ongoing.

Here, the mobile station is configured to be located in the handover-source cell before a handover, and the mobile station is configured to be located in the handover-destination cell after the handover.

In this specification, a base station can be configured to control one cell or a plurality of cells.

In the diversity handover method, the mobile station is configured to set up a plurality of connections with a plurality of cells simultaneously within a predetermined area in the vicinity of a border between cells.

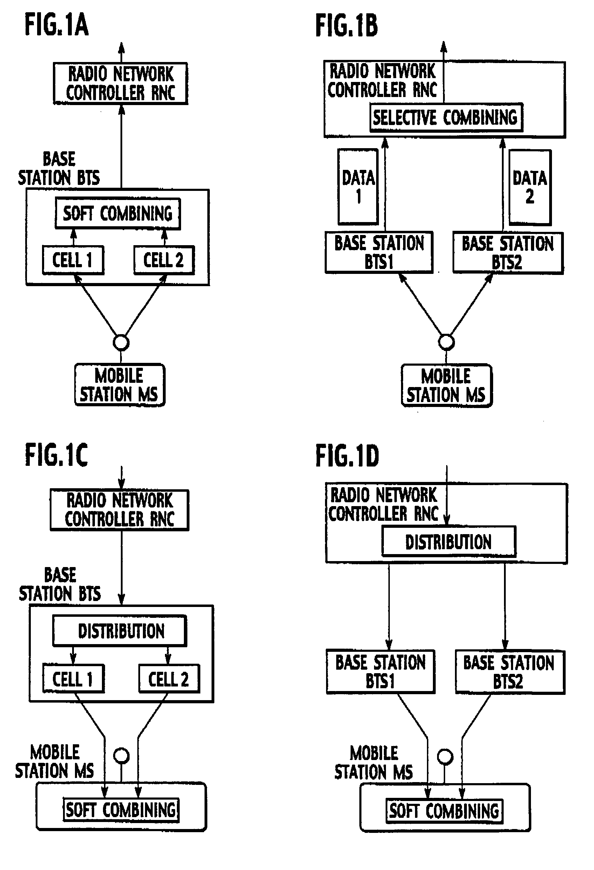

Referring to FIGs. 1A to 1D, a method of transmitting data (information) in the diversity handover method will be described. As shown in FIGs. 1A to 1D, a plurality of methods of transmitting data are known.

FIG. 1A shows one method of transmitting uplink data in the diversity handover method. In the transmitting method, a base station BTS is configured to receive same data from a mobile station MS in a plurality of cells 1 and 2, and to perform a soft combining on received same data so as to transmit the data to a radio network controller RNC.

FIG. 1B shows another method of transmitting uplink data in the diversity handover method. In the transmitting method, each of a plurality of base stations BTS1 and BTS2 is configured to receive same data from a mobile station in a cell controlled by each base station, and to transmit reliability information corresponding to a reception quality of the received data together with the received data to a radio network controller RNC.

Then, the radio network controller RNC performs a selective combining for selecting data having the highest reliability among from the plurality of data received from the plurality of base stations BTS1 and BTS2, so as to transmit selected data to an upstream apparatus (not shown).

Here, the reception quality of the data includes a reception SIR (Signal to Interference Power Ratio) , a reception level, a CRC checking result and so on.

FIG. 1C shows one method of transmitting downlink data in the diversity handover method. In the method, a base station BTS is configured to distribute data transmitted from a radio network controller RNC, and to transmit same data to a plurality of cells 1 and 2.

Then, the mobile station MS receives same data via a plurality of radio links via a plurality of cells 1 and 2, so as to perform a soft combining.

FIG. 1D shows another method of transmitting downlink data in the diversity handover method. In the method, a radio network controller RNC is configured to distribute data transmitted from a upstream apparatus, and to transmit same data to a plurality of base station BTS1 and BTS2.

Then, each of base stations BTS1 and BTS2 transmits received data to a cell controlled by each base station. The mobile station MS receives same data via a plurality of radio links from a plurality of base stations BTS1 and BTS2, so as to perform a soft combining.

However, there is a problem in that the mobile station MS has to allocate more memory areas than a mobile station performing a selective combining, because the mobile station MS performs a soft combining, in the conventional method of transmitting downlink data in the diversity handover.

Moreover, there is a problem in that a load of a decoding unit of the mobile station MS increases, and the mobile station MS has to include a plurality of decoding units when it is impossible to perform sequential processing, because the mobile station MS uses a reception quality of data after an error correction decoding if the mobile station MS performs the selective combining.

### BRIEF SUMMARY OF THE INVENTION

In viewing of the foregoing, it is an object of the present invention to provide a mobile station which receives a plurality of same data via a plurality of radio links from one or a plurality of base station(s), and can reduce required memory areas and a load of performing an error correction decoding.

A first aspect of the present invention is summarized as a mobile station which receives a plurality of same data via a plurality of radio links from at least one base station. The mobile station includes a measurer configured to measure a reception quality of each of the plurality of same data received via the plurality of radio links; a selector configured to select data having the highest reception quality among from the received plurality of same data; and a decoder configured to perform an error correction decoding on a selected data.

A second aspect of the present invention is summarized as a mobile station which receives a plurality of same data via a plurality of radio links. The mobile station includes a measurer configured to measure a reception quality of a part of each of the plurality of same data received via the plurality of radio links; a selector configured to select data which have a part of data having the highest reception quality among from the received plurality of same data; and a decoder configured to perform an error correction decoding on a selected data.

In the first and second aspects, the measurer can be configured to measure a reception SIR or a reception level as the reception quality.

### BRIEF DESCRIPTION OF THE SEVERAL VIEWS OF THE DRAWINGS

FIGs. 1A to 1D are diagrams for explaining methods of transmitting data in a conventional diversity handover method:
Fig. 2 is a functional block diagram of a mobile station according to a first embodiment of the present invention;
FIG. 3 is a flowchart showing an operation of the mobile station according to the first embodiment of the present invention;
Fig. 4 is a functional block diagram of a mobile station according to a second embodiment of the present invention;
Figs. 5A and 5B are diagrams for explaining data stored in a storing unit of the mobile station according to the second embodiment of the present invention; and
FIG. 6 is a flowchart showing an operation of the mobile station the second embodiment of the present invention.

### DETAILED DESCRIPTION OF THE INVENTION

### <A first embodiment of the present invention>

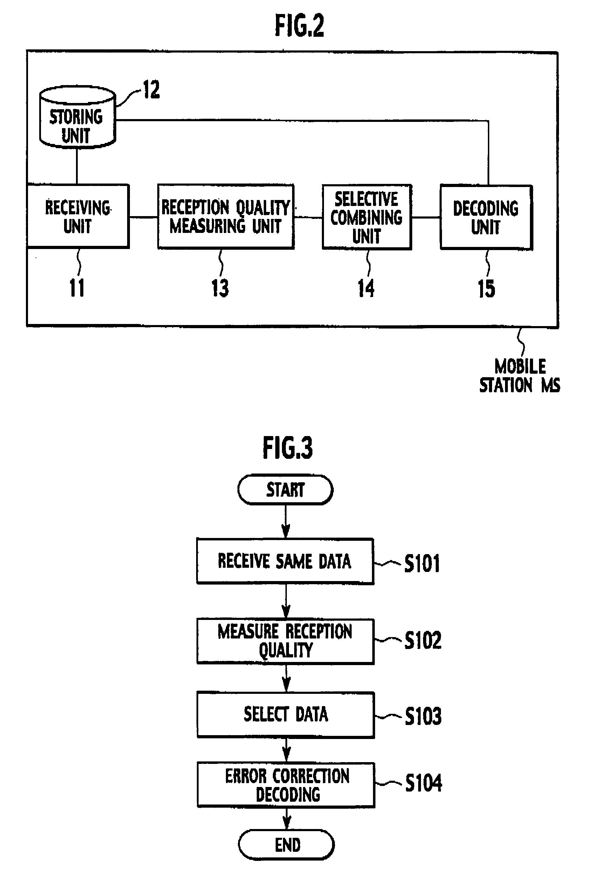

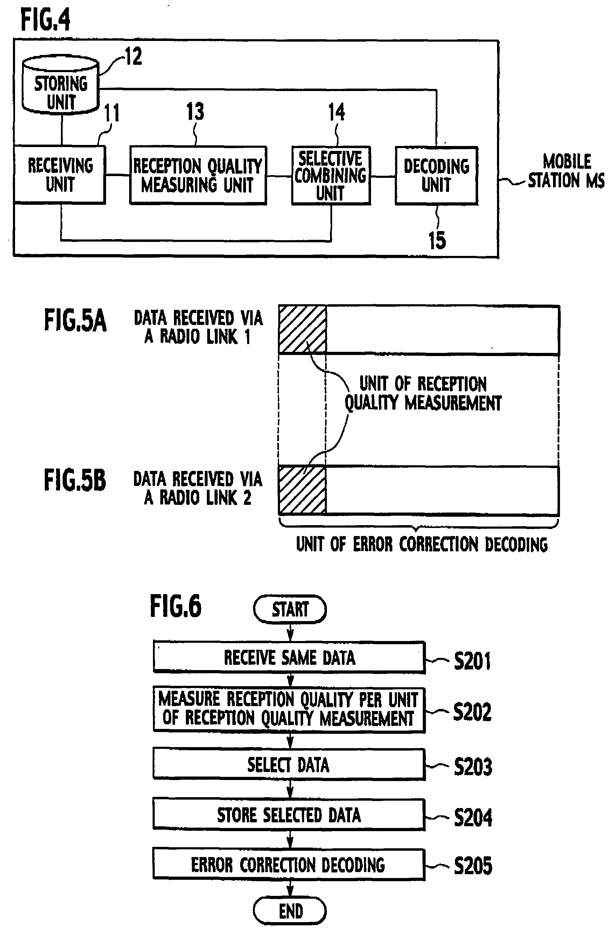

Referring to FIGs. 2 and 3, a mobile station MS according to a first embodiment of the present invention will be described. FIG. 2 is a functional block diagram of the mobile station MS according to the first embodiment.

As shown in FIG. 2, the mobile station MS according to the first embodiment includes a receiving unit 11, a storing unit 12, a reception quality measuring unit 13, a selective combining unit 14 and a decoding unit 15.

The receiving unit 11 is configured to receive a plurality of same data transmitted via a plurality of radio links from one or a plurality of base station(s) BTS.

For example, when the receiving unit 11 receives same data from three base stations BTS, the receiving unit 11 stores the same data into the storing unit 12, respectively.

When the receiving unit 11 receives same data from different cells of a base station BTS, the receiving unit 11 stores the same data into the storing unit 12, respectively.

The reception quality measuring unit 13 is configured to measure a reception quality of each of the plurality of same data received via the plurality of radio links, before an error correction decoding is performed on the same data.

Foe example, the reception quality measuring unit 13 measures an reception SIR, a reception level, a CRC checking result and so on, as the reception quality.

The selective combining unit 14 is configured to select data having the highest reception quality among from received data before the error correction decoding, in accordance with reception qualities measured by the reception quality measuring unit 13.

The decoding unit 15 is configured to extract data selected by the selective combining unit 14 from the storing unit 12, so as to perform the error correction decoding on extracted data.

Referring to FIG. 3, an operation of the mobile station MS according to the first embodiment will be specifically described.

As shown in FIG. 3, in step S101, the receiving unit 11 receives a plurality of same data transmitted via a plurality of radio links from one or a plurality of base station(s) BTS.

And, the receiving unit 11 stores the plurality of received same data together with identification information of each radio link via which the same data are transmitted, into the storing unit 12.

In step S102, the reception quality measuring unit 13 measures a reception quality of each data received by the receiving unit 11, so as to notify measurement results to the selective combining unit 14.

In step S 103, the selective combining unit 14 selects data having the highest reception quality among from the received data, in accordance with the measurement results notified by the reception quality measuring unit 13, so as to notify a selection result to the decoding unit 15.

In step 5104, the decoding unit 15 extracts data which is determined to have the highest reception quality from the storing unit 12, in accordance with the selection result notified by the selective combining unit 14, so as to perform the error correction decoding on extracted data.

The mobile station MS according to the first embodiment is configured to perform the error correction decoding on only data having the highest reception quality, so as to reduce a processing load of the decoding unit.

### <A second embodiment of the present invention>

Referring to FIGs. 4 to 6, a mobile station MS according to a second embodiment of the present invention will be described. FIG. 4 is a functional block diagram of the mobile station MS according to the second embodiment.

Hereinafter, differences between the mobile station MS according to the first embodiment and the mobile station MS according to the second embodiment will mainly described.

As shown in FIG. 4, the mobile station MS according to the second embodiment includes a receiving unit 11, a storing unit 12, a reception quality measuring unit 13, a selective combining unit 14 and a decoding unit 15.

The receiving unit 11 is configured to receive a plurality of same data transmitted via a plurality of radio links from one or a plurality of base station(s) BTS, so as to store a part of each of received same data into the storing unit 12.

As shown in FIGs. 5A and 5B, to be more specific, the receiving unit 11 is configured to store a part of received data (data corresponding to a unit of reception quality measurement) into the storing unit 12, respectively.

However, as shown in FIGS. 5A and 5B, the receiving unit 11 is configured to store data corresponding to a unit of error correction decoding into the storing unit 12, with regard to only data selected by the selective combining unit 14.

In examples of FIG. 5A and 5B, the storing unit 12 stores only a part of data (data corresponding to the unit of reception quality measurement) with regard to the data received via a radio link 1.

On the other hand, the storing unit 12 stores data corresponding to the unit of error correction decoding instead of a part of the data (data corresponding to the unit of reception quality measurement) with regard to the data received via a radio link 2.

In this case, it can be considered that the selective combining unit 14 has determined that a part of the data received via the radio link 2 has the highest reception quality.

The reception quality measuring unit 13 is configured to measure a reception quality of a part of each of a plurality of data (data corresponding to the unit of reception quality measurement), before an error correction decoding is performed on the data.

For example, the reception quality measuring unit 13 measures a reception SIR, a reception level and so on, as the reception quality.

For example, the unit of reception quality measurement is defined by using a predetermined number of bits, a predetermined number of symbols, a predetermined number of timeslots and so on.

The selective combining unit 14 is configured to select data which have a part of data having the highest reception quality among from the received plurality of same data, in accordance with reception qualities measured by the reception quality measuring unit 13, before an error correction decoding is performed on the received plurality of same data.

Moreover, the selective combining unit 14 is configured to instruct the receiving unit 11 to store selected data (data corresponding to the unit of error correction decoding) into the storing unit 12.

The decoding unit 15 is configured to extract data selected by the selective combining unit 14 from the storing unit 12, and to perform the error correction decoding on extracted data.

Referring to FIG. 6, an operation of the mobile station MS according to the second embodiment will be specifically described.

As shown in FIG. 6, in step S201, the receiving unit 11 receives a plurality of same data transmitted via a plurality of radio links from one or a plurality of base station(s) BTS.

And, the receiving unit 11 stores a part of each of the plurality of received same data (data corresponding to the unit of reception quality measurement) together with identification information of each radio link via which the same data are transmitted, into the storing unit 12.

In step S202, the reception quality measuring unit 13 measures a reception quality of a part of each data (data corresponding to the unit of reception quality measurement) received by the receiving unit 11, so as to notify measurement results to the selective combining unit 14.

In step S 203, the selective combining unit 14 selects data which have a part of data (data corresponding to the unit of reception quality measurement) having the highest reception quality among from the received data, in accordance with the measurement results notified by the reception quality measuring unit 13, so as to notify a selection result to the receiving unit 11 and the decoding unit 15.

Here, the receiving unit 11 stores data (data corresponding to the unit of error correction decoding) which have a part of data (data corresponding to the unit of reception quality measurement) having been determined to have the highest reception quality into the storing unit 12, in accordance with the selection result by the selective combining unit 14.

In step S204, the decoding unit 15 extracts data (data corresponding to the unit of error correction decoding) which have a part of data (data corresponding to the unit of reception quality measurement) having been determined to have the highest reception quality from the storing unit 12, in accordance with the selection result notified by the selective combining unit 14, so as to perform the error correction decoding on extracted data.

The mobile station MS according to the second embodiment is configured to store only a part of data (data corresponding to the unit of reception quality measurement) before an error correction decoding and data (data corresponding to the unit of error correction decoding) selected by the selective combining unit 14, so as to reduce required memories in the mobile station MS.

The present invention can provide a mobile station which receives a plurality of same data via a plurality of radio links from one or a plurality of base station(s), and can reduce required memory areas and a load of performing an error correction decoding.

Additional advantages and modifications will readily occur to those skilled in the art. Therefore, the invention in its broader aspects is not limited to the specific details and the representative embodiment shown and described herein. Accordingly, various modifications may be made without departing from the scope of the general inventive concept as defined by the appended claims and their equivalents.

## Claims

1. A mobile station which receives a plurality of same data via a plurality of radio links from at least one base station, the mobile station comprising:
a measurer configured to measure a reception quality of each of the plurality of same data received via the plurality of radio links;
a selector configured to select data having the highest reception quality among from the received plurality of same data; and
a decoder configured to perform an error correction decoding on a selected data.

2. The mobile station according to claim 1, wherein the measurer is configured to measure a reception SIR or a reception level as the reception quality.

3. A mobile station which receives a plurality of same data via a plurality of radio links, the mobile station comprising:
a measurer configured to measure a reception quality of a part of each of the plurality of same data received via the plurality of radio links;
a selector configured to select data which have a part of data having the highest reception quality among from the received plurality of same data; and
a decoder configured to perform an error correction decoding on a selected data.

4. The mobile station according to claim 3, wherein the measurer is configured to measure a reception SIR or a reception level as the reception quality.
